Europäisches Patentamt

European Patent Office

Office européen des brevets

(19)

(11) Veröffentlichungsnummer: **0 006 581**
**B1**

(12) **EUROPÄISCHE PATENTSCHRIFT**

(45) Veröffentlichungstag der Patentschrift: **28.09.83**

(21) Anmeldenummer: **79102056.3**

(22) Anmeldetag: **21.06.79**

(51) Int. Cl.³: **G 01 N 1/14**

(54) Vorrichtung zur kontaminationsfreien Probenahme einer Flüssigkeit aus einem Tank.

(30) Priorität: **27.06.78 DE 2828088**

(43) Veröffentlichungstag der Anmeldung:
**09.01.80 Patentblatt 80/1**

(45) Bekanntmachung des Hinweises auf die Patenterteilung:
**28.09.83 Patentblatt 83/39**

(84) Benannte Vertragsstaaten:
**DE FR IT NL**

(56) Entgegenhaltungen:
**DE - A - 1 566 053**
**DE - A - 1 812 742**
**DE - A - 2 312 010**
**DE - A - 2 461 585**
**DE - U - 1 984 800**
**US - A - 3 286 506**

(73) Patentinhaber: **RIEDEL-DE HAEN AKTIENGESELLSCHAFT**
**Wunstorfer Strasse 40**
**D-3016 Seelze 1 (DE)**

(72) Erfinder: **Habenstein, Klaus, Dr.**
**Birkenweg 3**
**D-3551 Lahntal (DE)**
Erfinder: **Döring, Werner, Dipl.-Ing.**
**An der Junkernwiese 30**
**D-3016 Seelze (DE)**

(74) Vertreter: **Meyer-Dulheuer, Karl-Hermann, Dr. et al,**
**HOECHST Aktiengesellschaft Zentrale Patentabteilung Postfach 80 03 20**
**D-6230 Frankfurt/Main 80 (DE)**

Courier Press, Leamington Spa, England.

Vorrichtung zur kontaminationsfreien Probenahme einer Flüssigkeit aus einem Tank

Die Erfindung bezieht sich auf eine Vorrichtung zur kontaminationsfreien Probenahme einer Flüssigkeit aus einem Tank.

Die Entnahme von Flüssigkeitsproben aus schwer zugänglichen, fest eingebauten und großen Vorratsgefäßen ist erfahrungsgemäß problematisch, wenn wegen Gefährlichkeit oder unangenehmen Eigengeruch ein Austreten von Flüssigkeit aus Probenahmevorrichtung und Probengefäß oder bei hochreinen Flüssigkeiten das Eindringen von Umgebungsluft oder Schmutz während der Probenahme verhindert werden muß. Die weitaus größte Zahl von Proben wird hierbei zum Zweck der analytischen Überprüfung gezogen. Bei der Routinekontrolle genügt meist eine schnell verfügbare qualitative Aussage, die vorzugsweise direkt "vor Ort" gewonnen wird.

Aus der deutschen Offenlegungsschrift DE—A—24 61 585 ist bereits eine Vorrichtung zum Nachweis der Gegenwart von freiem Wasser in Kohlenwasserstoffen bekannt, die (a) ein evakuiertes Röhrchen, das gegenüber der Gegenwart von freiem Wasser empfindliche Chemikalien enthält, an einem Ende geschlossen ist und am anderen Ende durch einen vakuumdichten und unter Aufrechterhaltung des Vakuums durchstechbaren Verschluß verschlossen ist, (b) ein Gestell zur Aufnahme des evakuierten Röhrchens und (c) eine Kanüle mit einem Einlaßende und einem Auslaßende enthält, die auf dem Gestell befestigt und so angeordnet ist, daß sie den Verschluß durchsticht, wenn das Röhrchen in das Gestell eingesetzt wird, so daß eine Leitung in das evakuierte Innere des Röhrchens hergestellt wird. Bei der praktischen Anwendung dieser Vorrichtung muß eine kleine Trebstoffprobe aus einer Tankleitung in einen kleinen Behälter abgezogen werden, in den dann das Gestell eingesetzt und aus dem mit dem evakuierten Röhrchen eine Probe entnommen wird. Bei der Abfüllung der Probe kann es insbesondere bei Ausführung durch ungeübte Kräfte leicht dazu kommen, daß Treibstoff verschüttet wird oder daß die Probe durch Staub oder durch den Tankleitungen anhaftenden Schmutz kontaminiert wird. Das ist insbesondere dann der Fall, wenn die Probe aus einem fest eingebauten tiefliegenden Behälter mit Hilfe einer Pipette gezogen werden muß.

Ferner ist eine Vorrichtung zum Abziehen einer Flüssigkeitsprobe von eimem mit einer Kappe verschlossenen Behälter bekannt, die aus einem Gehäuse besteht, an dem eine mit einer Unterdruckquelle verbindbare Kanüle anbringbar ist und an dem ein Halter zur Halterung des Behälters befestigt ist, und zwar in einer Lage, in der die Kappe des Behälters der Spitze der Kanüle benachbart ist; außerdem weist die Vorrichtung einen Betätigungshebel auf, der der Erzeugung einer linearen, hin- und hergehenden Bewegung zwischen dem Behälter und der Kanüle dient, um die Kanüle durch die Kappe hindurchzustechen und in die Flüssigkeit einzutauschen und dann von der Kappe wieder abzuziehen (vgl. deutsche Offenlegungsschrift DE—A—2 312 010). Diese Vorrichtung dient zur Entnahme kleiner Blutmengen aus einem Behälter für analytische Zwecke.

Eine Blutentnahmevorrichtung ist beschrieben in der deutschen Offenlegungsschrift DE—A—1 812 742. Sie besteht im wesentlichen aus einem röhrenförmigen Halter mit einem geschlossenen und einem offenen Ende und mit einer an dem Halter befestigten doppelendigen Nadel, deren eines Ende frei ist und deren anderes Ende in den Halterkörper hineinragt und durch eine in Längsrichtung zusammendrückbare Gummiröhre abgedeckt ist; dabei ist im offenen Ende des Halters eine evakuierte Blutentnameröhre mit einem geschlossenen Ende und einem offenen Ende angeordnet, in dem sich ein Stöpsel befindet, der über das innere Ende der Nadel geschoben werden kann, wobei die Gummiröhre zusammengedrückt wird.

Weiterhin ist bekannt, daß zum Heben, Dosieren und Mischen von Flüssigkeiten, insbesondere für chemische Zwecke, ein Saugball geeignet ist, der aus einem elastischen Material wie Weichgummi besteht (vgl. deutsche Gebrauchsmusterschrift (DE—U—1 984 800). Dieser Saugball ist durch eine verlängerten Ansaugstutzen charakterisiert, dessen innere Bohrung sich zum äußeren Ende hin schwach kegelig erweitert.

Es stellte sich daher die Aufgabe, eine Vorrichtung zu entwickeln, die eine leicht durchführbare, verschmutzungsfreie Überführung einer Flüssigkeit aus einem Tank in ein gegebenenfalls mit analytischen Hilfschemikalien versehenes Probegefäß gestattet. Zusätzlich wird eine einfache Handhabung des für die Probenahme verwendeten Gerätes angestrebt, da es häufig außerhalb geschützter Räumlichkeiten und von ungelernten Kräften bedient wird. Dieses Ziel wird durch eine Kombination von technischen Einzelheiten erreicht, die zum Teil aus verschiedenen Gebieten der Technik bekannt sind.

Die Erfindung betrifft eine Vorrichtung zur kontaminationsfreien Probenahme einer Flüssigkeit aus einem Tank, dadurch gekennzeichnet, daß sie einen Vorratsbehälter mit Ansaugvorrichtung aufweist, der einerseits der Probenzuführung aus dem Tank dient und andererseits über eine vakuumdicht schließende Ventileinrichtung mit einem evakuierten Probenahmegefäß aus transparentem Material verbindbar ist und daß die Ventileinrichtung, die an dem Vorratsbehälter oder dem Probenahmegefäß angebracht ist, aus einer angespitzten, vorn oder seitlich offenen Kanüle und einem deren Öffnung übergreifenden, verschiebbaren Überzug aus elastomerem Material besteht, der beim Durchstechen eines das Probenahmegefäß bzw. den Vorratsbehälter verschließenden Stopfens aus elastomerem Material die Öffnung der Kanüle freigibt und bei Entfernen des Probenahmegefäßes selbsttätig wieder verschließt.

In einer besonderen bevorzugten Ausgestaltung der Vorrichtung besteht der Vorratsbehälter aus einem gegebenenfalls kölbchenförmig erweiterten Y- oder liegenden T-Stück, dessen abwärts gerichteter Schenkel der Probenzuführung dient und an dessen einen aufwärts gerichtetem Schenkel die Ansaugvorrichtung und an dessen zweiten aufwärts oder seitwärts gerichtetem Schenkel die Ventileinrichtung angebracht ist.

Das an der Vorrichtung befindliche Ventil kann in an sich bekannter Weise (z.B. aus der deutschen Offenlegungsschrift DE—A— 15 66 053) aus einer angespitzten, vorn oder seitlich offenen Kanüle und einem die Öffnung übergreifenden verschiebbaren Überzug aus elastomerem Material bestehen, der bei Durchstechen eines ein evakuiertes, gegebenenfalls mit Reagenzien gefülltes Probenahmegefäß verschließenden Stopfens aus elastomerem Material die Öffnung der Kanüle freigibt und bei Entfernen des Probenahmegefäßes selbsttätig wieder verschließt. Wenn die Öffnung der Kanüle an deren Spitze sitzt, ist der verschiebbare Überzug aus elastomerem Material zweckmäßig so ausgebildet, daß er die Kanüle kappenartig übergreift. Die Ventileinrichtung kann aber auch aus einem Stopfen aus elastomerem Material bestehen, der sich mit einer Kanüle durchstechen läßt. Vorteilhafterweise wird eine derartige Vorrichtung zusammen mit einem gegebenenfalls mit Reagenzien gefüllten, evakuierten Probenahmegefäß aus transparentem Material verwendet, das mit einem eine angespitzte Kanüle tragenden Stopfen verschlossen ist, die ihrerseits mit einem kappenartig darübergreifenden, verschiebbaren Überzug aus elastomerem Material umgeben ist.

Die Ansaugvorrichtung kann bevorzugt aus einem käuflichen Pipettenball bestehen, aber auch aus einem mit Absperrhähnen versehenen zusammendrückbaren Gummi- oder Kunststoffbehälter, wie er z.B. zur Probenahme in Verbindung mit Gasprüfröhrchen verwendet wird. Bei einer anderen bevorzugten Ausführungsform besteht die Ansaugvorrichtung aus einem Zylinder mit darin beweglichen Kolben. In dem Fall ist es möglich, daß die Ventilvorrichtung in einer de beschriebenen Ausführungsformen seitlich am Zylinder der Ansaugvorrichtung angebracht ist. Die aus Zylinder und Kolben bestehende Ansaugvorrichtung kann aber bevorzugt auch so ausgestaltet sein, daß der Kolben als Hohlkolben ausgebildet und die Ventileinrichtung im Boden des Hohlkolbens angebracht ist.

Der Aufbau und die Wirkungsweise der erfindungsgemäßen Vorrichtung soll im weiteren anhand von Zeichnungen erläutert werden.

Figur 1 zeigt eine Y-förmige Ausführung mit Pipettenball als Ansaugvorrichtung und mit einem Stopfen aus elastomerem Material als Ventilvorrichtung sowie ein mit Kanüle versehenes Probenahmegefäß.

Figur 2 zeigt einen Zylinder mit darin beweglichem Kolben als Ansaugvorrichtung, der einen seitlichen Stutzen aufweist, an dem als Ventilvorrichtung eine mit einer Kanüle versehene Führungshülse befestigt ist, sowie ein mit einem Stopfen aus elastomerem Material verschlossenes Probenahmegefäß.

Figur 3 zeigt einen in einem Zylinder beweglichen Hohlkolben mit im Boden angebrachter Ventilvorrichtung sowie ein mit einem Stopfen aus elastomerem Material verschlossenes Probenahmegefäß.

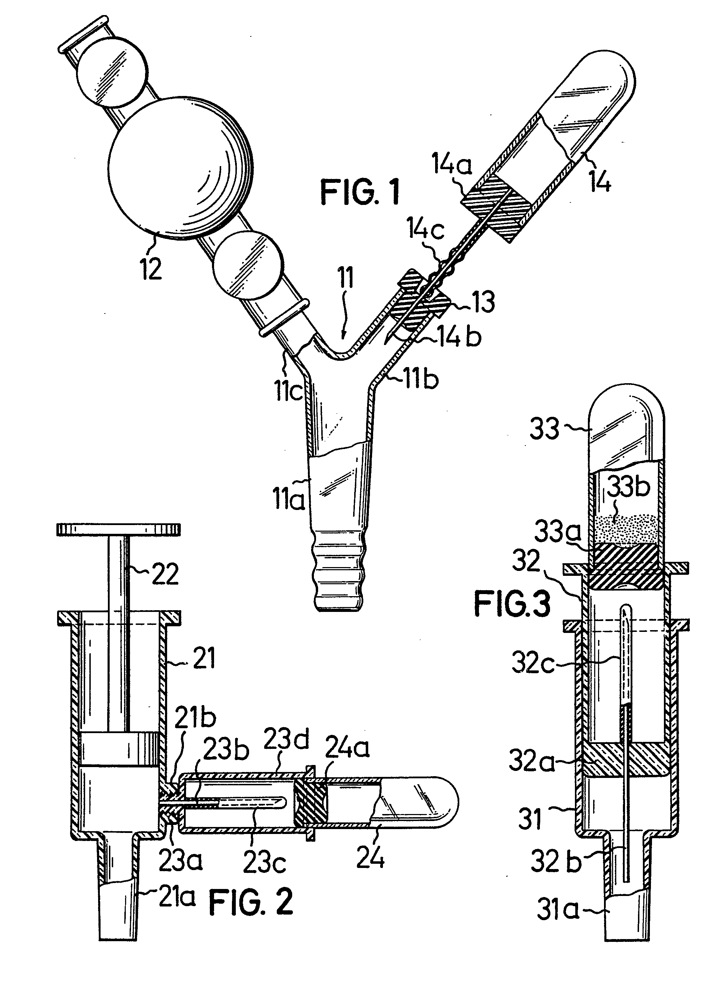

Im einzelnen ist in Figur 1 ein Y-förmiger Vorratsbehälter 11 aus Glas oder transparentem Kunststoff dargestellt, dessen abwärts gerichteter, der Probenzuführung dienender Schenkel 11 a in Form einer Schlaucholive endet, auf die ein Schlauch zur Verlängerung geschoben werden kann. Der eine aufwärts gerichtete Schenkel 11 b ist mit einem Stopfen 13 aus elastomerem Material verschlossen, der mit einer Kanüle durchstochen werden kann. In Fig. 1 ist ferner ein evakuiertes, ggf. Reagenzien enthaltendes Probenahmegefäß 14 aus transparentem Material dargestellt, das mit einem Verschlußstopfen 14 a aus Kunststoff verschlossen ist. In Verschlußstopfen 14 a ist, z.B. mit Hilfe einer nicht dargestellten Gewindeverbindung, eine Kanüle 14 b befestigt, die mit dem Innenraum des Probenahmegefäßes 14 in Verbindung steht. Das herausragende Ende der Kanüle 14 b ist angespitzt und von einem kappenartig darübergreifenden Überzug 14c aus elastomerem Material umgeben, der mit dem offenen Ende auf dem Verschlußstopfen 14 aufsteht. In Fig. 1 ist ein während der Benutzung der Vorrichtung auftretender Zustand dargestellt, wo der Überzug 14c und der Stopfen 13 durch die Kanüle 14b durchstochen und der Überzug 14c zwischen Stopfen 13 und Verschlußstopfen 14a a faltenbalgartig zusammengedrückt ist. An dem zweiten aufwärts gerichteten Schenkel 11c des Vorratsbehälters 11 ist als Ansaugvorrichtung ein käuflicher, an beiden Enden mit Ventilen versehener Pipettenball 12 angeschlossen.

Zum Gebrauch der Vorrichtung wird der abwärts gerichtete Schenkel 11a des Vorratsbehälers 11 bzw. ein auf Schenkel 11a geschobener in Figur 1 nicht dargestellter Schlauch in die z.B. in einem im Erdreich eingelassenen Trankbehäler befindliche Probeflüssigkeit getaucht. Durch entsprechende Betätigung des Pipettenballs 12 wird eine Probe der Probeflüssigkeit in den Vorratsbehäler 11 eingesaugt. Die im Pipettenball 12 vorhandenen Ventile ermöglichen es, so viele Saugbewegungen zu machen, daß der Vorratsbehäler 11 gefüllt wird, und verhindern ein Zurücksinken der Probeflüssigkeit. Anschließend wird das evakuierte, ggf. mit Reagenzien gefüllte Probenahmegefäß 14 mit der Spitze der Kanüle 14b auf dem Stopfen 13 aufgesetzt. Bei entsprechendem Druck durchsticht die Kanüle 14b zunächst den kappenartig darübergreifenden Überzug 14c und danach den Stopfen 13. Dabei wird der verschiebbare Überzug zwischen dem Stopfen 13 und dem Verschluß 14a des Probenahmegefäßes 14 faltenbalgartig zusammengedrückt. Sobald die Kanüle 14b den Stopfen 13 ganz durchstochen hat, ist eine flüssigkeitsleitende Verbindung zwischen dem Probenahmegefäß 14 und dem Vorratsbehälter 11 hergestellt, und eine den Druckverhältnissen entsprechende Menge der Probeflüssigkeit wird in das Probenahmegefäß 14 überführt. Nach Zurückziehen der Kanüle aus dem Stopfen 13 gleitet der zusammengedrückte Überzug 14c aufgrund seiner elastischen Eigenschaften in die alte Stellung zurück und verschließt die Kanüle 14b. Gegebenenfalls im Probenahmegefäß 14 enthaltene Reagenzien können nun mit der Probeflüssigkeit reagieren, und eine sich daraus ergebene Farbreaktion kann durch das transparente Material des Probenahmegefäßes 14 hindurch begutachtet werden. Nach Beendigung dieses Vorgangs kann die im Vorratsbehälter 11 befindliche Probeflüssigkeit durch entsprechende Betätigung der Ventile des Pipettenballs 12 abgelassen werden. Es können zuvor jedoch auch noch weitere Proben mit anderen Probenahmegefäßen abgefüllt werden.

In Figur 2 ist ein zylinderförmiger Vorratsbehäler 21 aus Kunststoff dargestellt, dessen Wandung zum unteren Ende hin eingezogen ist, so daß er in einen Stutzen 21 a mit verringertem Querschnitt ausläuft. Oberhalb der Verengung weist die Wandung des Zylinders seitlich eine runde Öffnung auf, die in einen kurzen Stutzen 21b übergeht. Am Stutzen 21b ist mit einem, z.B. gewindeförmig ausgebildeten, Adapter 23a eine Führungshülse 23d aus transparentem Material befestigt, in deren Boden eine Kanüle 23b so eingelassen ist, daß ihr eines Ende durch den Adapter 23a hindurch mit den Innenraum von Vorratsbehälter 21 in Verbindung steht. Das andere in die Führungshülse 23d hineinragende Ende der Kanüle 23b ist angespitzt und von einem kappenartig darübergreifenden verschiebbaren Überzug 23c aus elastomerem Material umgeben. Der Überzug 23c steht mit dem offenen Ende am Boden der Führungshülse 23d auf.

Im weiteren Teil des zylinderförmigen Vorratsbehälters 21 ist ein den Wandungen vakuumdicht anliegender, gleichfalls aus Kunststoff bestehender Kolben 22 beweglich angeordnet.

Zum Gebrauch der Vorrichtung wird der abwärts gerichtete Stutzen 21a bzw. ein daran befestigter, in der Zeichnung nicht dargestellter Schlauch in die zu untersuchende, z.B. in einem Fahrzeugtank befindliche Probeflüssigkeit getaucht. Durch Aufwärtsbewegen des Kolbens 22 wird soviel Probeflüssigkeit in den Zylinder 21 eingesaugt, daß der Flüssigkeitsspiegel oberhalb der in den Adapter 23a mündenden Kanüle 23b liegt. Dann wird in die Führungshülse 23d, wie in der Figur dargestellt, ein mit einem Stopfen 24a aus elastomerem Material verschlossenes, ggf. Reagenzien enthaltendes, evakuiertes Probenahmegefäß 24 eingeführt. Bei entsprechendem Durch gegen die Spitze der Kanüle 23b durchsticht diese zunächst den verschiebbaren Überzug 23c und sodann den das Probenahmegefäß 24 verschließenden Stopfen 24a. Dadurch wird eine flüssigkeitsleitende Verbindung zwischen dem Inneren des Zylinders 21 und des evakuierten Probenahmegefäßes 24 hergestellt, sodaß eine den Druckver-hältnissen entsprechende Mende der Probe-flüssigkeit in das Probenahmegefäß 24 überfließen kann. Sobald das Probenahmegefäß 24 hinreichend gefüllt ist, wird es von der Kanüle 23b abgezogen. Dadurch schiebt sich der kappenartig übergreifende Überzug 23c wieder über die Kanüle 23b und verschließt die Vorrichtung, so daß es nicht zu einem unbeab-sichtigten Ablassen der angesaugten Probe-flüssigkeit kommt. Erst nach Beendigung der Probenahme (bzw. mehrerer beabsichtigter Probenahmen und ggf. des Tests) wird durch Abwärtsbewegung von Kolben 22 in Zylinder 21 die angesaugte Probeflüssigkeit abgelassen.

Es ist ersichtlich und dem Fachmann selbstverständlich, daß die Vorrichtung der Fig. 2 auch in der Weise ausgeführt werden kann, daß der Stutzen 21b durch einen Stopfen aus elastomerem Material verschlossen wird (ähnlich wie in Figur 1), durch den mit einem mit Kanüle versehenen probenahmegefäß (z.B. wie Kombination 14, 14a, 14b, 14c) eine Probe aus Zylinder 21 entnommen werden kann.

In Fig. 3 ist ein Zylinder 31 aus transparentem Kunststoff mit verengtem abwärts gerichteten Stutzen 31a dargestellt, in dem ein gleichfalls aus transparentem Kunststoff bestehender, der Wandung vakuumdicht anliegender Hohlkolben 32 beweglich angeordnet ist. Durch den Boden 32a des Hohlkolbens 32 ist eine einseitig angespitzte Kanüle 32b Hindurchgeführt und daran z.B. mit einem in der Figur nich dargestelltem Gewinde so befestigt, daß sie sich nicht verschieben kann. Kanüle 32b ragt mit ihrem einen Ende in den Zylinder 31 bzw. je nach Stellung des Hohlkolbens auch in den Stutzen 31a hinein. Das andere angespitzte Ende von Kanüle 32b ragt in das Innere des Hohlkolbens 32 und ist umgeben von einem kappenartig darübergreifenden Überzug 32c aus elastomerem Material, der mit dem offenen Ende auf dem Boden 32a von Hohlkolben 32 aufsteht.

Zum Gebrauch dieser Vorrichtung wird der abwärts gerichtete Stutzen 31a oder ein ggf. daran befestigter, in der Figur nicht dargestellter Schlauch in die zu untersuchende, z.B. in einem Motorradtank befindliche Probeflüssigkeit getaucht. Durch Aufwärtsbewegen des Hohlkolbens 32 wird Probeflüssigkeit in den Zylinder 31 eingesaugt. Die im Stutzen 31a bzw. im Schlauch befindliche Luft sammelt sich unterhalb des Hohlkolbens 32, jedoch ragt das untere Ende der Kanüle 32b in die angesaugte Flüssigkeit hinein. In den Hohlkolben 32 wird ein mit einem Stopfen 33a aus elastomerem Material verschlossenes, Reagenzien 32b enthaltendes evakuiertes Probenahmegefäß 33 aus transparentem Material eingeführt und in der bei Figur 2 besprochenen Weise eine Probe entnommen. Nach Abziehen des Probenahmegefäßes 33 von der Kanüle 32b wird letztere durch den verschiebbaren Überzug 32c wieder verschlossen und die im Zylinder 31 verbliebene Probe kann durch Abwärtsbewegen des Hohlkolbens 32 wieder in den Tank zurückgegeben werden. Die in das Probenahmegefäß 33 eingezogene Flüssigkeitsprobe reagiert mit den darin befindlichen Reagenzien 33b unter Ausbildung einer Farbreaktion, die durch das transparente Gefäß 33 hindurch beobachtet und ausgewertet werden kann.

**Patentansprüche**

1. Vorrichtung zur kontaminationsfreien Probenahme einer Flüssigkeit aus einem Tank, dadurch gekennzeichnet, daß sie einen Vorratsbehälter (11, 21, 31) mit Ansaugvorrichtung aufweist, der einerseits der Probenzuführung aus dem Tank dient und andererseits über eine vakuumdicht schließende Ventileinrichtung mit einem evakuierten Probenahmegefäß (14, 24, 33) aus transparentem Material verbindbar ist und daß die Ventileinrichtung, die an dem Vorratsbehälter oder dem Probenahmegefäß angebracht ist, aus einer angespitzten, vorn oder seitlich offenen Kanüle (14b, 23b, 32b) und einem deren Öffnung übergreifenden, verschiebbaren Überzug (14c, 23c, 32c) aus elastomerem Material besteht, der beim Durchstechen eines das Probenahmegefäß bzw. den Vorratsbehälter verschließenden Stopfens (13, 24a, 33a) aus elastomerem Material die Öffnung der Kanüle freigibt und bei Entfernen des Probenahmegefäßes selbsttätig wieder verschließt.

2. Vorrichtung nach Anspruch 1, dadurch gekennzeichnet, daß der Vorratsbehälter aus einem gegebenenfalls kölbchenförmig erweiterten Y- oder liegendem T-Stück (11) besteht, dessen abwärts gerichteter Schenkel (11a) der Probenzuführung dient und an dessen einen aufwärts gerichtetem Schenkel (11c) die Ansaugvorrichtung (12) und an dessen zweiten aufwärts oder seitwärts gerichtetem Schenkel (11b) die Ventileinrichtung (13) angebracht ist.

3. Vorrichtung nach Anspruch 1, dadurch gekennzeichnet, daß die Ansaugvorrichtung aus einem Zylinder (21) mit darin beweglichem Kolben (22) besteht und die Ventileinrichtung (23b, 23c) seitlich am Zylinder (21) der Ansaugvorrichtung angebracht ist.

4. Vorrichtung nach Anspruch 1, dadurch gekennzeichnet, daß die Ansaugvorrichtung aus einem Zylinder (31) mit darin beweglichem Hohlkolben (32) besteht und die Ventileinrichtung (32b, 32c) im Boden (32a) des Hohlkolbens (32) angebracht ist.

**Revendications**

1. Dispositif de prélèvement d'échantillons de liquide dans un réservoir, sans contamination, caractérisé en ce qu'il présente un récipient de réserve (11, 21, 31) à dispositif d'aspiration qui, d'une part, sert à amener les échantillons venant du réservoir et, d'autre part, peut être relié, par un dispositif à soupapes fermant de façon étanche au vide, à un récipient de prélèvement (14, 24, 33) transparent dans lequel le vide a été fait, et en ce que le dispositif à soupapes monté sur le récipient de réserve ou sur le récipient de prélèvement est constitué par une canule (14b, 23b, 32b) pointue, ouverte à l'avant ou sur le côté, et une gaine (14c, 23c, 32c) coulissante en matière élastomère recouvrant l'ouverture de la canule (14b, 23b, 32b) et qui, lorsqu'un bouchon (13, 24a, 33a) en matière élastomère fermant le récipient de prélèvement ou le récipient de réserve est percé, dégage l'ouverture de la canule et la referme automatiquement lorsqu'on retire le récipient de prélèvement.

2. Dispositif selon la revendication 1, caractérisé en ce que le récipient de réserve est fait d'un tube en Y ou en T (11), éventuellement élargi en forme de petit ballon, dont la branche dirigée vers le bas (11a) sert à amener les échantillons, le dispositif d'aspiration (12) étant monté sur l'une de ses branches dirigées vers le haut (11c) et le dispositif à soupapes (13) étant monté sur sa deuxième branche dirigée vers le haut ou vers le côté (11b).

3. Dispositif selon la revendication 1, caractérisé en ce que le dispositif d'aspiration est constitué par un cylindre (21) dans lequel se trouve un piston mobile (22) et en ce que le dispositif à soupapes (23b, 23c) est monté latéralement sur le cylindre (21) de ce dispositif d'aspiration.

4. Dispositif selon la revendication 1, caractérisé en ce que le dispositif d'aspiration est constitué par un cylindre (31) dans lequel se trouve un piston mobile et creux (32) et en ce que le dispositif à soupapes (32b, 32c) est placé dans le fond (32a) du piston creux (32).

**Claims**

1. Device for the contamination-free taking of samples of liquids out of a tank, characterised in that it shows a container (11, 21, 31) with suction device which, on the one hand, serves for feeding-in the sample out of the tank and, on the other hand, is able to be connected, via a vacuum-tight valve device, with an evacuated sample receptacle (14, 24, 33) of transparent material, and that the valve device which is mounted to the container or to the sample receptacle consists of a pointed cannula (14b, 23b, 32b) being open at the top or at the side and a covering (14c, 23c, 32c) of elastomeric material which is sliding and overlaps the opening of the cannula, which covering, upon piercing through a stopper (13, 24a, 33a) of elastomeric material closing the sample receptacle or the container, sets free the opening or the cannula and closes it automatically upon removal of the sample receptacle.

2. Device according to claim 1, characterised in that the container consists of an Y-piece which may be enlarged in the form of a little bulb or of a horizontal T-piece (11), the downward directed leg (11a) of which serves for feeding-in the sample and the upward directed leg (11c) is provided with the suction device (12) and the other upward or sideward directed second leg (11b) is provided with the valve device (13).

3. Device according to claim 1, characterised in that the suction device consists of a cylinder (21) with a piston (22) movable therein and the valve device (23b, 23c) is mounted at the side of cylinder (21) of the suction device.

4. Device according to claim 1, characterised in that the suction device consists of a cylinder (31) with a piston (32) movable therein and the valve device (32b, 32c) is mounted in the bottom (32a) of the hollow piston (32).

FIG. 1

14a
14
14c
13
14b
11
11c
11b
11a
12

FIG. 2

22
21
21b
23b
23d
24a
23a
23c
24
21a

FIG.3

33
33b
33a
32
32c
32a
31
32b
31a